# FASCICULE DE BREVET EUROPEEN

(11) **EP 3 649 726 B1**
(45) Date de publication et mention de la délivrance du brevet: **22.11.2023**
(21) Numéro de dépôt: 18734256.3
(22) Date de dépôt: 04.07.2018
(51) Int. Cl.: H02K 33/16, H02K 33/04, G06F 3/01

(54) **ACTIONNEUR VIBROTACTILE**
VIBROTAKTILER AKTUATOR
VIBROTACTIL ACTUATOR

(30) Priorité: 07.07.2017 FR 1756450
(43) Date de publication de la demande: 13.05.2020
(73) Titulaire: Actronika SAS, 75017 Paris (FR)
(72) Inventeur: HAYWARD, Vincent, 75013 Paris (FR); COMOT, Pierre, 75019 Paris (FR); PIJEWSKI, Rafal, 75019 Paris (FR)
(74) Mandataire: Cabinet Camus Lebkiri
(86) Numéro de dépôt international: PCT/EP2018/068069
(87) Numéro de publication internationale: WO 2019/008021

(56) Documents cités:
- CN-A- 105 680 663
- US-A1- 2012 104 875
- US-A1- 2012 112 565
- US-A1- 2016 226 359

## Description

### DOMAINE TECHNIQUE

La présente invention concerne un actionneur vibrotactile permettant de générer des vibrations à partir de mouvements engendrés par un réseau de Halbach en interaction avec un courant électrique.

L'invention trouve des applications dans le domaine des interfaces haptiques destinées à reproduire les sensations tactiles à l'aide de stimuli vibrotactiles et, d'une façon générale, dans tous les domaines où les vibrations provoquent des sensations comme, par exemple, dans le domaine des simulateurs ou dans le domaine de la réalité augmentée.

### ETAT DE LA TECHNIQUE

De nos jours, il est connu d'utiliser des actionneurs vibrotactiles pour communiquer des informations par voie tactile à un être humain. Ces actionneurs vibrotactiles transforment un signal électrique, généré par une machine (par exemple un téléphone mobile ou un ordinateur), en un signal vibratoire perceptible par le toucher.

Le téléphone mobile est un exemple bien connu de dispositif équipé d'un actionneur vibrotactile. Dans cet exemple, l'actionneur vibrotactile comporte généralement une masse excentrique entrainée en rotation par un moteur électrique, cette masse générant, par ses déplacements, des vibrations dues au principe de conservation du moment cinétique qui informent l'utilisateur d'une information, par exemple de la réception d'une communication téléphonique ou d'un message.

Un autre exemple d'actionneur vibrotactile connu est celui utilisé dans certains pavés tactiles permettant de diriger, par glissement d'un doigt, un pointeur sur un écran. Généralement, dans les pavés tactiles, le déplacement du pointeur est obtenu par variation d'un faible courant électrique lié à la proximité des doigts, qui par nature possèdent des propriétés diélectriques facilement détectables. Cette variation électrique permet également, par de brèves oscillations, de simuler le « clic » d'un bouton mécanique, tel que le bouton d'une souris. De tels pavés tactiles ont été décrits, notamment par MacKenzie, I. Scott, et Aleks Oniszczak dans l'article : "The tactile touchpad", In CHI'97 Extended Abstracts on Human Factors in Computing Systems, pp. 309-310, ACM, 1997.

Cependant, ces actionneurs vibrotactiles sont, non seulement, relativement épais mais en outre ils sont généralement mono fréquentiels. Ils permettent donc de générer des vibrations d'une amplitude vibratoire irrémédiablement liée à la vitesse de rotation et donc à la fréquence d'oscillation, ce qui offre un ressenti unique à l'utilisateur. Une autre famille d'actionneurs vibrotactiles reposent sur le phénomène de résonnance d'un système masse-ressort et possèdent donc le même inconvénient. Autrement dit, l'utilisateur ressent des vibrations, mais toutes les vibrations sont perçues d'une manière identique. Ces actionneurs vibrotactiles connus ne sont donc pas exploitables dans des applications haptiques où l'on cherche à reproduire les riches sensations du toucher.

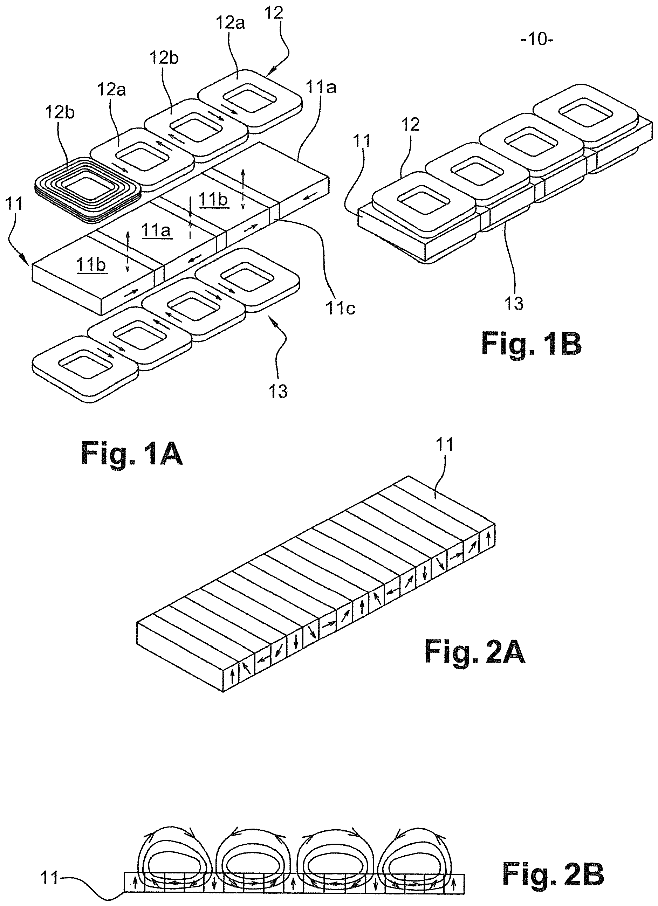

Par ailleurs, il est connu, en mécanique, d'utiliser des moteurs linéaires électrodynamiques pour générer des mouvements de translation. Parmi ces moteurs linéaires, celui décrit dans le document US2014/0346901 offre une configuration d'une épaisseur relativement faible. Un tel moteur linéaire 10 comporte, comme représenté sur les figures 1A et 1B, un réseau d'aimants 11 comportant une pluralité d'aimants 11a, 11b alignés dont les polarités sont alternées. Cette configuration du réseau d'aimants 11 permet une concentration de lignes de champs, générées par ledit réseau, sensiblement orthogonales au plan du réseau d'aimants 11. Ce moteur linéaire 10 comporte, en outre, un premier et un second ensembles 12, 13 de bobines électromagnétiques, plates et rectangulaires. Les ensembles de bobines 12, 13 sont positionnés chacun dans un plan parallèle au plan du réseau d'aimants 11, de part et d'autre dudit réseau d'aimants 11. De cette façon, les ensembles de bobines 12, 13 créent, sous l'effet d'un courant électrique les traversant, une force de Laplace horizontale, entre chaque plan des ensembles de bobines et le plan du réseau d'aimants. Cette force de Laplace a pour effet de déplacer les ensembles de bobines 12, 13 relativement au réseau d'aimants 11 et, inversement, de déplacer le réseau d'aimants relativement aux ensembles de bobines de sorte à générer un mouvement de translation. Une des applications les plus connues d'un tel moteur linéaire est le train à sustentation magnétique dans lequel les déplacements relatifs, les ensembles de bobines et le réseau d'aimants assurent le déplacement du train le long d'un rail.

Un autre vibreur linéaire, décrit dans le document US 2012/104875 A1, propose un réseau de bobines plates positionné parallèlement à un réseau d'aimants. Ce vibreur linéaire présente une structure magnétique radiale qui, du fait de sa symétrie, provoque des fuites des champs magnétiques sur la face extérieure, ce qui nécessite l'emploi d'une armature en acier doux qui augmente l'épaisseur du vibreur linéaire. D'autres structures magnétiques radiales sont décrites dans les documents US 2012/112565 A1, Us 2016/226359 A1 et CN 105 680 663 A qui toutes présentent les mêmes inconvénients de fuites des champs magnétiques et donc d'emploi d'au moins un élément en acier doux.

Dans les moteurs linéaires, certaines configurations d'aimants ont la particularité de guider les lignes de champs d'un côté seulement du plan du réseau d'aimants. Cette configuration d'aimants, appelée réseau de Halbach, consiste à disposer les aimants de sorte à briser la symétrie de la géométrie du parcours des lignes de champs, comme représenté sur les figures 2A et 2B. Pour cela, les aimants sont agencés de façon à ce que la polarisation des aimants contigus diffère. Par exemple, la polarisation de deux aimants contigus peut être orientée suivant des directions orthogonales ou suivant des angles inférieurs à 90°, comme dans l'exemple des figures 2A-2B où les angles de décalage des directions de polarisation sont de l'ordre de 45°. Plus l'angle entre les directions de polarisation est petit, plus la dispersion des lignes de champs est réduite, ce qui permet, à courant égal, un plus grand déplacement relatif en translation.

### RESUME DE L'INVENTION

Pour répondre au problème évoqué ci-dessus, le demandeur propose un actionneur vibrotactile comportant un moteur linéaire à réseau de Halbach dans lequel les mouvements translatifs engendrés par le moteur linéaire sont transformés en vibrations haptiques par des moyens de guidage glissants ou élastiques.

L'invention est exposée dans l'ensemble des revendications joint.

L'actionneur vibrotactile tel que défini dans les revendications a l'avantage de posséder une large bande passante permettant la génération d'une grande gamme d'amplitudes et de fréquences des vibrations pouvant reproduire les sensations du toucher chez l'humain. Cet actionneur a en outre l'avantage de présenter une faible épaisseur lui permettant d'être introduit dans toutes sortes de dispositifs.

Dans la suite de la description, le positionnement des différents éléments de l'actionneur selon l'invention sera défini dans un repère orthogonal XYZ, dans lequel l'axe X définit la direction longitudinale de l'actionneur, l'axe Y définit sa direction transversale et l'axe Z définit sa direction verticale. Les plans PA du réseau d'aimants et PB du réseau de bobines sont des plans parallèles, définis suivant le plan XY du repère XYZ.

### BREVE DESCRIPTION DES FIGURES

D'autres avantages et caractéristiques de l'invention apparaîtront à la lecture de la description, illustrée par les figures dans lesquelles :
- Les figures 1A et 1B, déjà décrites, représentent une vue en perspective et une vue éclatée d'un moteur linéaire selon l'art antérieur ;
- Les figures 2A et 2B, déjà décrites, représentent une vue en perspective d'un réseau de Halbach ainsi que les lignes de champs générées par ce réseau ;
- Les figures 3A et 3B représentent deux modes de réalisation d'un actionneur vibrotactile selon l'invention ;
- Les figures 4 à 9 représentent divers modes de réalisation de l'actionneur vibrotactile selon l'invention ;
- Les figures 10A, 10B et 10C représentent divers modes de réalisation des bobines du réseau de bobines de l'actionneur vibrotactile selon l'invention.
- Les figures 11A, 11B, 11C et 11D représentent divers modes de réalisation permettant d'améliorer la performance du dispositif dans la direction normale ;
- Les figures 12A-12B représentent encore d'autres modes de réalisation dans lesquels le réseau d'aimants assure le déplacement d'une surface mobile.

### DESCRIPTION DETAILLEE D'AU MOINS UN MODE DE REALISATION

Un exemple de réalisation d'un actionneur vibrotactile comportant un moteur linéaire à réseau de Halbach dans lequel les mouvements translatifs engendrés par le moteur linéaire sont transformés en vibrations haptiques, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

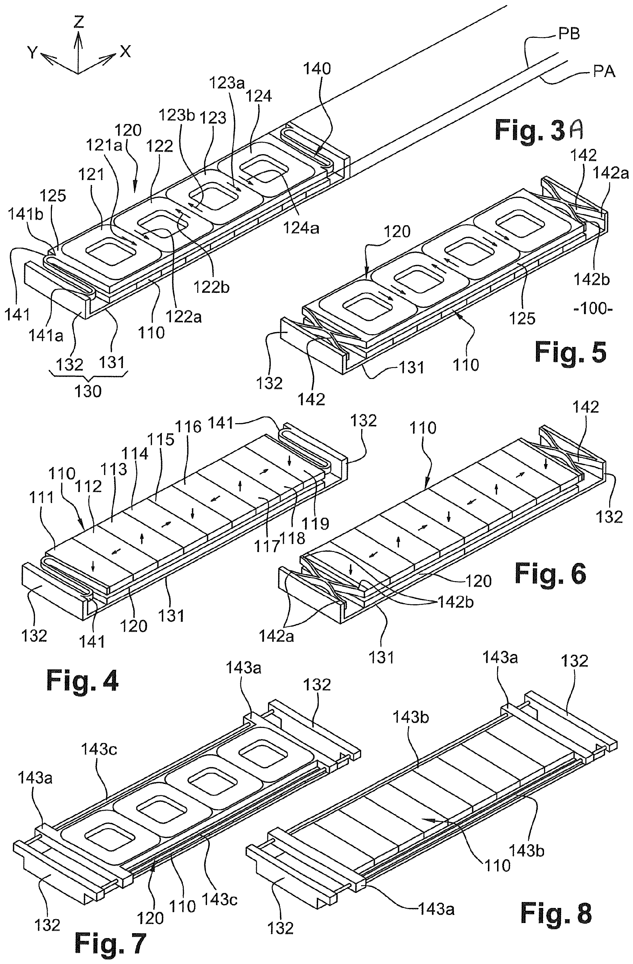

La figure 3A représente un actionneur vibrotactile selon certains modes de réalisation de l'invention. Cet actionneur vibrotactile 100 comporte un réseau de bobines 120 et un réseau d'aimants 110 formant ensemble un moteur linéaire.

Le réseau de bobine 120 comporte une pluralité de bobines électromagnétiques juxtaposées longitudinalement les unes à côté des autres. Dans l'exemple de la figure 3A, le réseau de bobines comporte quatre bobines, référencées 121, 122, 123, 124. L'homme du métier comprendra que le nombre de bobines peut varier en fonction, par exemple, des dimensions du moteur linéaire ou des dimensions des bobines, sans toutefois modifier la configuration de l'actionneur telle que décrite par la suite. Les bobines 121-124, alimentées électriquement par une source d'alimentation non visible sur les figures, sont connectées entre elles de sorte à former un réseau de bobines linéaire. Elles sont agencées de sorte que le courant circule, dans les segments adjacents de deux bobines juxtaposées, dans des directions communes qui alternent de paire en paire. Autrement dit, les bobines sont agencées de sorte que le courant circule dans le même sens dans le premier segment, par exemple 121a, d'une première bobine 121 et dans le deuxième segment 122a d'une deuxième bobine 122 lorsque le premier segment de la première bobine est contigu au deuxième segment de la deuxième bobine. Ainsi, dans l'exemple de la figure 3A, le courant dans le segment 121a de la bobine 121 et le courant dans le segment 122a de la bobine 122 circulent dans une même première direction tandis que le courant dans le segment 122b de la bobine 122 et le courant dans le segment 123b de la bobine 123 circulent dans une même seconde direction, cette seconde direction étant opposée à la première direction. De façon similaire, le courant dans le segment 122a de la bobine 122 et le courant dans le segment 124a de la bobine 124 circulent dans la même direction, par exemple la première direction.

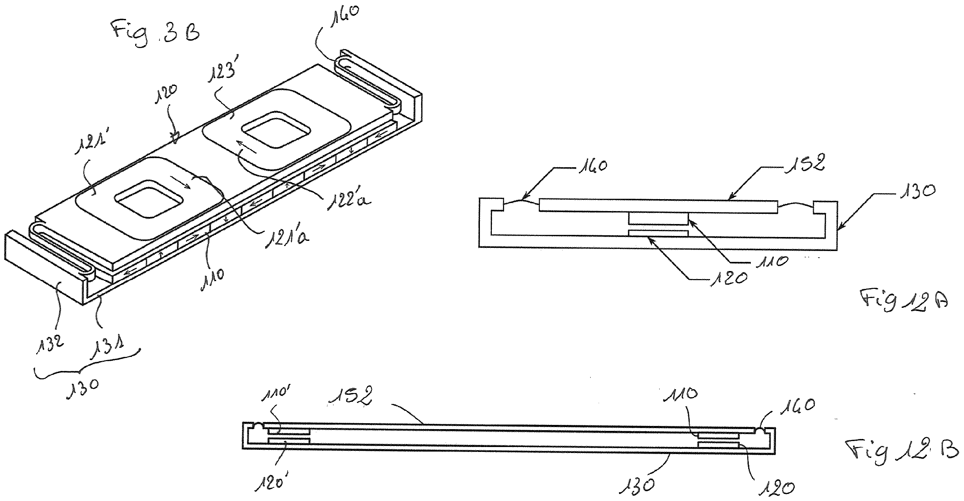

Selon une variante, représentée sur la figure 3B, le réseau de bobine 120 comporte une pluralité de bobines électromagnétiques non-contiguës les unes des autres. Dans cette variante, le réseau de bobines 120 comporte des bobines positionnées dans un même plan mais espacées les unes des autres d'une distance prédéfinie. Dans l'exemple de la figure 3B, le réseau de bobines 120 comporte deux bobines, référencées 121' et 123', espacées d'une distance de l'ordre de la largeur d'un aimant du réseau d'aimants 110. Autrement dit, dans cette variante, les bobines ne sont pas contigües les unes aux autres et sont traversées par un courant dont la direction est identique d'une bobine à l'autre. Comme pour la variante de la figure 3A, le nombre de bobines peut varier en fonction, par exemple, des dimensions du moteur linéaire ou des dimensions des bobines, sans toutefois modifier la configuration de l'actionneur décrite. Les bobines, alimentées électriquement par une source d'alimentation non visible sur les figures, sont connectées entre elles de sorte à former un réseau de bobines linéaire 120. Elles sont agencées de sorte que le courant circule dans des directions identiques dans chacune des bobines. Autrement dit, les bobines sont agencées de sorte que le courant circule dans le sens opposé dans le premier segment, par exemple 121'a, d'une première bobine 121' et dans le deuxième segment 122'a d'une deuxième bobine 122' lorsque le premier segment de la première bobine est voisin du deuxième segment de la deuxième bobine.

Quelle que soit la variante considérée (bobines contigües ou bobines non-contigües), les bobines 121-124 ou 121'-124' sont des bobines plates, par exemple de forme rectangulaire, positionnées dans un même premier plan PB. Les bobines 121-124 peuvent être montées et fixées sur un support 125 plan de sorte à assurer la planéité du réseau de bobine 120. Ce support 125 peut être une plaquette réalisée dans un matériau isolant assurant une fonction structurelle comme de l'ABS (Acrylonitrile Butadiène Styrène) ou tout autre plastique injectable.

Par mesure de simplification de la description, plusieurs modes de réalisation, variantes et exemples vont être décrits, par la suite, pour un réseau de bobines dans lequel les bobines sont contigües les unes aux autres, étant entendu qu'ils pourraient tout aussi bien être décrits pour un réseau de bobines dont les bobines sont distantes - c'est-à-dire non-contigües - les unes des autres.

Le réseau d'aimants 110 est un réseau de Halbach, comme représenté sur la figure 4, comportant une pluralité d'aimants permanents plats dont les polarités sont orientées dans plus de deux directions différentes. Par exemple, la polarité d'un premier aimant 118 peut être orientée dans la direction X, tandis que celle d'un deuxième aimant 117 (contigu au premier aimant) est orienté dans une direction formant un angle de 90° avec la direction X et la direction Y, qu'un troisième aimant 116 (contigu au deuxième aimant) est orienté dans la direction -X et qu'un quatrième aimant 115 (contigu au troisième aimant) est orienté dans une direction formant un angle de 90° avec la direction -X et la direction -Y. Un tel réseau de Halbach permet d'orienter le champ magnétique généré par le réseau d'aimants sur une même face dudit réseau. Dans l'exemple de la figure 4, le réseau de Halbach 110 comporte neuf aimants permanents 111-119, appelés par la suite simplement aimants, qui présentent quatre directions de polarités différentes. L'homme du métier comprendra que le nombre d'aimants et le nombre de directions des polarités peuvent varier sans toutefois modifier la configuration de l'actionneur telle que décrite par la suite, les polarités des aimants pouvant, par exemple, être orientées dans les directions Y ou - Y et dans toutes sortes de directions du plan XY. Les aimants 111-119 sont agencés longitudinalement les uns à la suite des autres et assemblés les uns avec les autres, par exemple par collage, encastrement ou frettage. Ces aimants 111-119 sont positionnés de sorte que deux aimants consécutifs présentent des polarités d'orientations différentes. Dans l'exemple de la figure 4, la polarité de l'aimant 111 est orientée dans une direction à -90° par rapport à l'axe X, la polarité de l'aimant 112 est orientée dans la direction opposée à l'axe X, la polarité de l'aimant 113 est orientée dans une direction à 90° de l'axe X et la polarité de l'aimant 114 est orientée suivant la direction de l'axe X, le même schéma d'orientation des polarités étant reproduit pour les aimants 115 à 119.

Les aimants du réseau d'aimants 110 sont agencés linéairement suivant un plan PA, parallèle au plan PB du réseau de bobines 120, comme représenté sur la figure 3A. Les plans PA du réseau d'aimants et PB du réseau de bobines sont des plans parallèles, définis suivant les axes X et Y du repère XYZ. Le plan PA du réseau d'aimants 110 est distant, suivant l'axe Z, du plan PB du réseau de bobines 120 de sorte à engendrer un entrefer e (suivant l'axe Z) entre le réseau de bobines et le réseau d'aimants. Cet entrefer e est d'une dimension réduite par rapport aux dimensions longitudinales et transversales des réseaux d'aimants et de bobines. Avec cette configuration, le réseau de bobines 120 est positionné à l'aplomb du réseau d'aimants 110, les bobines 121-124 étant en regard des aimants 111-119.

Selon certains modes de réalisation, le réseau de bobines 120 est positionné au-dessus du réseau d'aimants 110, comme représenté sur la figure 3A. Autrement dit, suivant la direction Z, l'actionneur vibrotactile 100 comporte de façon ordonnée le bâti 130, le réseau d'aimants 110 et le réseau de bobines 120. Le réseau de bobines 120 est alors à l'aplomb du réseau d'aimants 110.

Dans d'autres modes de réalisation, comme celui représenté sur la figure 4, le réseau d'aimants 110 est positionné au-dessus du réseau de bobines 120. En d'autres termes, dans ces modes de réalisation, suivant la direction Z, l'actionneur vibrotactile 100 comporte de façon ordonnée, le bâti 130, le réseau de bobines 120 et le réseau d'aimants 110. Le réseau d'aimants 110, permanents, est alors à l'aplomb du réseau de bobines 120.

Quelle que soit la disposition relative du réseau de bobines 120 et du réseau d'aimants 110, ledit réseau d'aimants engendre des lignes de champs magnétiques dirigées vers le réseau de bobine 120. Lorsqu'un courant oscillant circule dans le réseau de bobines 120, une force de Laplace oscillante est générée suivant l'axe X. L'interaction électromagnétique entre les lignes de courant traversant le réseau de bobines 120 et le flux magnétique généré par le réseau d'aimants 110 transforme l'énergie électrique en une énergie mécanique linéaire engendrant des mouvements translatifs relatifs entre ledit réseau d'aimants et ledit réseau de bobines.

L'actionneur vibrotactile selon l'invention comporte des moyens de guidage élastiques, référencés 140 sur les figures 3 et 4, adaptés pour assurer le déplacement longitudinal des pièces 110 et 120 relativement l'une à l'autre si bien que si l'une d'entre elles est liée à un objet extérieur tout déplacement de la pièce libre se traduira par un déplacement de l'objet extérieur par le principe de la conservation du moment cinétique, transformant l'énergie électrique en vibrations haptiques. Ces moyens de guidage élastiques 140 forment une suspension élastique qui guide un des réseaux par rapport à l'autre selon une trajectoire sensiblement rectiligne. Ces moyens de guidage élastiques 140 peuvent se présenter sous la forme, par exemple, d'un ou plusieurs éléments de guidage et de rappel, appelés plus simplement éléments de rappel, ou bien d'un système à glissière - comme décrit par la suite - qui ont pour objectif de transformer l'énergie électrique par interaction des réseaux de bobines 120 et d'aimants 110 en vibrations haptiques utilisant la force de Laplace à cet effet. En effet, les moyens de guidage élastiques 140, de par leur caractéristique élastique, offrent une large amplitude de vibration.

Selon certains modes de réalisation, l'actionneur vibrotactile comporte un bâti 130 dans lequel sont logés au moins en partie le réseau de bobines 120 et le réseau d'aimants 110. Ce bâti 130 peut comporter un plateau longitudinal 131 équipé, à au moins une de ses extrémités, d'un bras d'appui 132. Dans l'exemple des figures 3 et 4, le plateau 131 du bâti 130 comporte un bras d'appui 132 à chacune de ses extrémités longitudinales. Dans ces modes de réalisation, les moyens de guidage élastiques 140 peuvent être montés dans le bâti 130 et solidarisés avec les bras d'appui 132 et l'un ou l'autre des réseaux de bobines 120 ou d'aimants 110.

Dans les modes de réalisation de la figure 3A, le réseau d'aimants 110 est solidarisé avec le plateau 131 du bâti 130 et le réseau de bobines 120 est suspendu au-dessus du réseau d'aimants 110, via les moyens de guidage 140. Un entrefer e, d'épaisseur fine par rapport aux autres dimensions de l'actionneur vibrotactile, est alors créé entre le réseau d'aimants 110 et le réseau de bobines 120. Cet entrefer e peut être, par exemple, de quelques dizaines de micromètres. Sous l'effet de l'interaction électromagnétique entre le réseau de bobines 120 et le réseau d'aimants 110, le réseau de bobines 120 est libre de se déplacer en translation dans la direction X (dans le sens +X et le sens -X) par rapport au réseau d'aimants 110.

Dans certains modes de réalisation, les moyens de guidage élastiques 140 peuvent comporter des éléments de rappel 140 ménagés entre le réseau de bobines 120 et les bras d'appui 132, comme représenté sur la figure 3A, ou entre le réseau d'aimants 110 et les bras d'appui 132, comme représenté sur la figure 4. Dans ces exemples, l'un des réseaux (bobines ou aimants) est fixé sur le plateau 131 du bâti 130 tandis que l'autre réseau est suspendu entre les éléments de rappel 140. Ces modes de réalisation optimisent la génération des vibrations haptiques en permettant le déplacement relatif d'un des réseaux tout en évitant les frottements des éléments de rappel 140 sur le plateau du bâti.

Les éléments de rappel 140 peuvent être, par exemple, des lames minces 141, 142 positionnées chacune entre le réseau de bobines 120 ou le réseau d'aimants 110 et un bras d'appui 132 du bâti 130. Chaque lame mince 141 peut présenter, dans le plan PA ou le plan PB, une forme en S avec un premier sommet 141a fixé sur le bras d'appui 132 et un second sommet 141b fixé à l'extrémité longitudinale du réseau de bobines ou d'aimants. Des exemples de lames minces en S 141 sont représentés sur les figures 3 et 4. De telles lames minces en S offrent une grande rigidité en torsion.

Selon d'autres exemples, représentés sur les figures 5 et 6, les éléments de rappel 140 peuvent être des lames minces 142 présentant, dans le plan PA ou le plan PB, une forme en X avec deux jambes du X 142a fixées sur le bras d'appui 132 et deux autres jambes du X 142b fixées à une extrémité longitudinale du réseau de bobines ou d'aimants. Ces modes de réalisation ont l'avantage de produire un guidage sensiblement plus précis que celui assuré par les lames minces 141 en forme de S.

Qu'elles aient une forme en X ou une forme en S, les lames minces 141, 142 sont réalisées dans un matériau suffisamment rigide pour rester longitudinalement entre les bras d'appui 132 et les réseaux de bobines ou d'aimants et suffisamment élastique pour transformer l'énergie mécanique linéaire en vibrations d'amplitudes variables. Les lames minces 141, 142 peuvent être réalisées dans des élastomères tels que les polysiloxanes, dans des caoutchoucs ou des feuillards métalliques à haute limite élastique tels que certains alliages cuivreux ou aciers permettant de générer des vibrations haptiques à partir de l'énergie mécanique linéaire issue des réseaux de bobines et d'aimants. Les lames minces peuvent, en particulier, être réalisées dans un alliage cuivreux au béryllium, cette matière ayant l'avantage d'être suffisamment souple et élastique pour offrir une large bande passante de l'ordre de 10 Hz à plusieurs kHz. Selon certains modes de réalisation, les sommets des lames minces en S 141 ou les jambes des lames minces en X 142 sont fixées sur les bras d'appui 132 et/ou les extrémités longitudinales du réseau de bobines ou du réseau d'aimants, par exemple par collage. Selon d'autres modes de réalisation, les sommets des lames minces en S 141 ou les jambes des lames minces en X 142 sont moulées, par exemple par injection, avec les bras d'appui 132 et/ou les extrémités du support 125 du réseau de bobines.

Dans certains modes de réalisation, par exemple ceux des figures 3 et 5, les lames minces 141 ou 142 sont fabriquées dans un matériau électriquement conducteur. Ainsi, les lames minces forment non seulement les éléments de rappel de l'actionneur 100 mais elles forment en outre les connexions électriques qui relient électriquement les bobines à une source d'alimentation électrique.

Dans certains modes de réalisation, par exemple ceux des figures 4 et 6, le réseau d'aimants 110 a l'avantage de former un pont thermique qui favorise la dissipation de la chaleur produite par effet Joule, dans les bobines 121-124 lors de la circulation du courant électrique.

Selon d'autres modes de réalisation, les éléments de rappel 140 sont des coulisseaux 143a, 143b montés coulissant sur des glissières 143c et formant, avec lesdites glissières, un système à glissière 143. Des exemples de tels modes de réalisation sont représentés sur les figures 7 et 8. Ce système à glissière 143 comporte, par exemple, deux glissières 143c parallèles, positionnées longitudinalement de part et d'autre du réseau de bobines 120 (exemple de la figure 7) ou du réseau d'aimants 110 (exemple de la figure 8). Ces glissières 143c sont fixées, à chaque extrémité longitudinale, dans les bras d'appui 132 du bâti 130. Les coulisseaux 143a, 143b du système à glissière 143 sont prévus pour coulisser sur les glissières 143c. Les coulisseaux 143a, 143b sont des éléments transversaux mobiles, solidaires du réseau de bobines 120 (exemple de la figure 7) ou du réseau d'aimants 110 (exemple de la figure 8). Ces coulisseaux 143a, 143b peuvent être fixés chacun à une extrémité longitudinale du réseau de bobines ou d'aimants, par exemple par collage, ou peuvent être formés d'une seule pièce, par exemple par moulage, avec le support 125 du réseau de bobines 120. Selon une autre mode de réalisation apparenté au système à glissière, le guidage peut être assuré par un système de roulement où des billes métalliques, en plastique ou en élastomère, sont contraintes par des chemins de roulement d'un type bien connu de l'homme du métier.

Dans les modes de réalisation des figures 7 et 8, les coulisseaux 143a, 143b peuvent être associés à des ressorts de compression, par exemple deux, prévus pour recentrer les coulisseaux vers une position de repos.

Dans les modes de réalisation des figures 7 et 8, les coulisseaux 143a, 143b réalisés dans une paire de matériaux à faible coefficient de friction comme acier contre bronze fritté, ou acier contre plastiques autolubrifiants, permettent de guider avec précision le mouvement des parties mobiles issu de l'interaction des réseaux de bobines et d'aimants en vibrations haptiques.

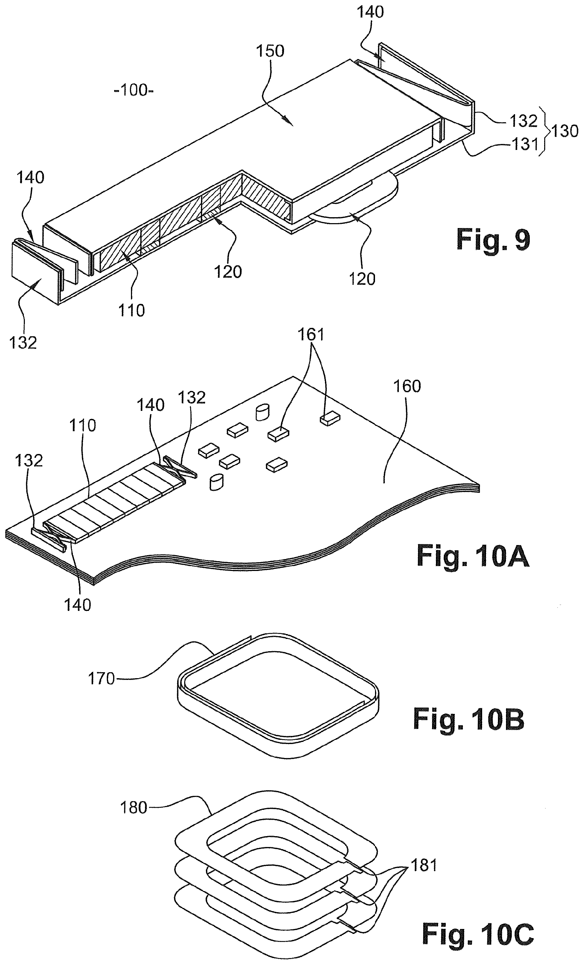

Dans certains modes de réalisation, le réseau de bobines 120 et le réseau d'aimants 110 sont au moins partiellement enfermés dans un coffrage 150, comme dans l'exemple de la figure 9. Ce coffrage 150 est fixé sur le réseau de bobines 120 (mode de réalisation non représenté) ou sur le réseau d'aimants 110 (mode de réalisation de la figure 9) de sorte à être mobile en translation par rapport au plateau 131 du bâti 130. Le coffrage 150 se déplace alors linéairement, en simultanéité avec le réseau (de bobines ou d'aimants) dont il est solidaire. Dans ce mode de réalisation, les éléments de rappel 140 sont ménagés entre le coffrage 150 et les bras d'appui 132 du bâti 130, ce qui permet un montage simplifié des moyens de rappel 140 dans l'actionneur 100.

Dans des variantes, représentées sur les figures 12A et 12B, le réseau de bobines 120 et le réseau d'aimants 110 sont positionnés entre le bâti 130 et une surface mobile 152. La surface mobile 152, par exemple une surface plane comme un écran tactile ou une surface gauche, est fixée sur le réseau d'aimants 110, le réseau de bobines 120 étant quant à lui fixé sur le bâti 130. Dans ces variantes, le réseau de bobines 120 et le réseau d'aimants 110 sont positionnés en vis-à-vis et espacés l'un de l'autre de sorte à permettant le déplacement de la surface mobile 152 par rapport au bâti 130. La surface mobile 152 et le bâti 130 sont reliés par des moyens de guidage élastiques 140, comme par exemple une liaison flexible, qui autorisent le déplacement de ladite surface mobile 152. L'ensemble des réseaux de bobines 120 et d'aimants 110 génère ainsi un retour haptique dans la surface mobile 152. Dans l'exemple de la figure 12A, un seul réseau de bobine 120 et un seul réseau d'aimants 110 sont positionnés en regard l'un de l'autre, sensiblement au centre de la surface mobile 152. Dans l'exemple de la figure 12B, un premier ensemble de réseaux de bobines 120 et d'aimants 110 est positionné à une extrémité de la surface mobile 152, un second ensemble de réseaux de bobines 120' et d'aimants 110' étant positionné à une autre extrémité de ladite surface mobile. L'homme du métier comprendra que le nombre d'ensembles de réseaux de bobines et d'aimants et leur positionnement peut dépendre de divers critères comme, par exemple, des dimensions et/ou de la masse de la surface mobile, des dimensions des réseaux de bobines et d'aimants, des applications recherchées, etc.

Quel que soit le mode de réalisation, la masse en mouvement est optimisée dans l'actionneur vibrotactile de l'invention, ce qui permet audit actionneur de présenter une dimension suivant l'axe Z petite devant les dimensions suivant les axes X et Y. L'actionneur vibrotactile de l'invention peut ainsi présenter une épaisseur inférieure à 4mm, ce qui lui confère un format dont le rapport des dimensions s'approche de celui d'une plaquette.

Selon certains modes de réalisation, les bobines 121-124 du réseau de bobines 120 peuvent être réalisées au moyen de pistes conductrices gravées dans un circuit imprimé multicouche. Un exemple d'un actionneur comportant un tel réseau de bobines est représenté sur la figure 10A. Dans ces modes de réalisation, le réseau de bobines est gravé dans le substrat 160 à la surface duquel sont connectés des composants électroniques 161 utilisés par le dispositif pour des applications autres que les vibrations haptiques. Le substrat 160 constitue non seulement le réseau de bobines mais également le plateau 131 du bâti. Des bras d'appui 132 sont alors fixés directement sur le substrat 160 pour maintenir le réseau d'aimants 110 au-dessus des bobines gravées. Ces modes de réalisation présentent l'avantage de réduire encore l'encombrement de l'actionneur vibrotactile puisque le réseau de bobines est gravé dans le substrat 160. L'actionneur présente alors une épaisseur sensiblement égale à celle d'un composant électronique. Ces modes de réalisation présentent en outre l'avantage de simplifier la fabrication de l'actionneur en utilisant des méthodes connues pour fabriquer le réseau de bobines et d'éliminer les connexions nécessaires à l'alimentation électrique du réseau de bobine, ce qui réduit les coûts de fabrication tout en augmentant la fiabilité de l'actionneur.

Dans certains modes de réalisation, chaque bobine 121-124 du réseau de bobines comporte un fil électrique de section ronde enroulé, par exemple autour d'un mandrin de section rectangulaire, de sorte à former une bobine plate rectangulaire.

Dans d'autres modes de réalisation, chaque bobine 121-124 du réseau de bobines comporte un ruban conducteur 170 bobiné. Ce ruban conducteur 170, par exemple en cuivre ou en aluminium suffisamment pur, est enroulé sur sa longueur, suivant une forme rectangulaire, de sorte à former une bobine rectangulaire telle que celle représentée sur la figure 10B. Cette bobine est une bobine plate dont l'épaisseur correspond à la largeur du ruban conducteur.

Dans d'autres modes de réalisation, chaque bobine 121-124 du réseau de bobines comporte un empilement de spires 180 telles que représenté sur la figure 10C. Les spires 180, dont le nombre dépend de l'épaisseur et/ou de la puissance voulue pour la bobine, sont réalisées dans des feuilles de matériau conducteur, découpées sous forme de couronnes rectangulaires et empilées les unes sur les autres. Chaque spire 180 est connectée à la suivante, ou la précédente, par exemple par des points de soudure 181 de façon à former une bobine à tours multiples, plate. De telles bobines à empilement de spires présentent l'avantage de pouvoir être fabriquées directement dans un support, ce qui permet la réalisation d'actionneurs particulièrement fins.

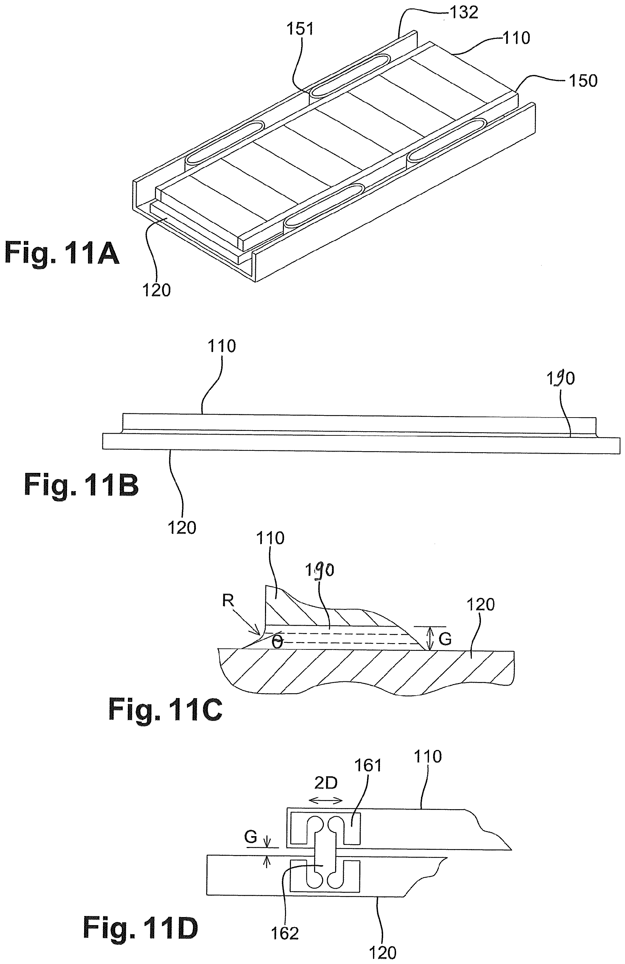

Dans certains modes de réalisation, il peut être intéressant d'optimiser la performance de l'actionneur vibrotactile en réduisant la distance entre le réseau d'aimants 110 et le réseau de bobines 120 à une valeur très faible. En effet, comme montré sur la figure 2B, les lignes de champ d'un réseau de Halbach, quoique généralement orthogonales au plan principal du réseau dans les régions de symétrie, ont tendance à diverger dans les régions adjacentes. Aussi, lorsque l'actionneur est utilisé dans des fréquences basses et donc que les déplacements sont importants, la force de Laplace n'est pas parfaitement tangentielle au plan principal de l'actionneur (plan du réseau d'aimants et/ou de bobines) ce qui peut provoquer un déplacement intempestif des pièces en mouvement relatif dans la direction normale Y. Pour éviter un tel déplacement intempestif, les éléments de guidage et de rappel peuvent être des lames minces 151 en forme de boucles positionnées latéralement entre le bâti 132 et le réseau d'aimants 110 ou le réseau de bobines 120, comme représenté sur la figure 11A. Ces lames minces 151 peuvent être formées de rubans minces métalliques ou réalisées dans des élastomères, tels que ceux cités précédemment, qui possèdent l'avantage d'une grande rigidité dans la direction Y, normale aux plans PA, PB des réseaux d'aimants et de bobines, et d'une grande souplesse dans la direction tangentielle Z. Ces boucles 151 sont reliées à la pièce mobile, par exemple au réseau d'aimants 110, d'une part et au bâti 132 d'autre part. Ces modes de réalisation présentent le double avantage de rendre l'actionneur non seulement plus mince mais aussi plus efficace puisqu'il profite d'un champ magnétique plus intense.

Dans certaines applications, en particulier celles à haute performance, il peut être intéressant de contraindre fortement les mouvements réciproques des pièces mobiles - en particulier le réseau d'aimants ou le réseau de bobines - dans la direction normale Y. Une telle contrainte peut être obtenue par des moyens d'entrave, tel qu'un fluide 190 introduit dans l'espace interstitiel disponible entre le réseau d'aimants 110 et le réseau de bobines 120, c'est-à-dire entre les pièces en mouvement réciproque dont la valeur désirée de l'épaisseur est préférentiellement de moins de dix microns, comme représenté sur la figure 11B. Un tel fluide 190 est maintenu en place de façon permanente grâce à la force capillaire résultante de d'utilisation d'un fluide approprié tel que de la glycérine, du glycol éthylène ou de l'huile minérale raffinée, qui sont peu toxiques et présentent des viscosités appropriées. La présence d'un ménisque de rayon moyen *R*, à la jonction entre le réseau d'aimants 110 et le réseau de bobines 120, et dont un exemple est illustré par la figure 11C, est associé à une force capillaire due à la pression résultante à la tension superficielle du fluide 190. Cette pression P peut être estimée par la formule *P* = γ(2 cos *θ*/*G*) où y est la tension de surface, *θ* l'angle de raccordement liquide-solide, et G l'épaisseur de l'espace interstitiel. Un calcul rapide avec la formule précédente montre que, pour les matériaux cités ci-dessus, cette force sera de l'ordre de 1 milli-Newton pour des surfaces en regard d'un centimètre carré et donc qu'elle peut être à prendre en considération dans le dimensionnement du système de guidage. La présence d'un liquide peu visqueux entre les deux pièces en mouvement réciproque n'empêche pas leur déplacement dans la direction tangentielle Z mais contraint toute oscillation rapide selon la direction normale Y. Cette variante permet de réaliser des actionneurs vibrotactiles ayant un espace interstitiel G très faible, ce qui permet la réalisation d'un actionneur mince et efficace.

Un autre mode de réalisation du guidage dans la direction normale Y au plan PA et PB de l'actionneur peut aussi consister en au moins une paire de brides 161 rapportées aux extrémités des réseaux d'aimants 110 et de bobines 120 en mouvement réciproque. Ces brides 161 peuvent être formées de pièces comportant deux sections minces comme illustré par la figure 11D. Un rapide calcul montre que si le déplacement d'une amplitude 2D des réseaux d'aimants 110 et de bobines 120 provoque une inclinaison de plus ou moins trente degrés de la barre de liaison 162, la variation de distance interstitielle G ne dépassera pas 14%.

L'actionneur vibrotactile selon l'invention peut être inséré dans ou fixé à tout type de dispositif pour communiquer des vibrations haptiques audit dispositif. En effet, si le plateau 131 du bâti 130 est fixé à une structure à laquelle les vibrations doivent être communiquées, par application du principe de conservation du moment cinétique, aux fréquences supérieures à la fréquence de résonnance naturelle de l'ensemble constitué de la masse en mouvement et de la suspension formée par le réseau d'aimants ou le réseau de bobines, le rapport des vitesses des bobines et de la masse de la structure à faire vibrer sont dans le rapport inverse de leurs masses réciproques. Un tel actionneur, de par ses petites dimensions, peut être fixé, par exemple, sur un bracelet de type bracelet-montre pour communiquer, par vibrations, l'heure à son utilisateur. Il peut également être fixé, par exemple, dans une semelle de chaussure, sur un vêtement ou sur tout élément en contact avec l'utilisateur.

Bien que décrit à travers un certain nombre d'exemples, variantes et modes de réalisation, l'actionneur vibrotactile selon l'invention comprend divers variantes, modifications et perfectionnements qui apparaîtront de façon évidente à l'homme du métier, étant entendu que ces variantes, modifications et perfectionnements font partie de la portée de l'invention.

## Revendications

1. Actionneur vibrotactile (100), comportant un réseau (120) de bobines électromagnétiques plates (121-124) positionnées de façon contigüe dans un premier plan (PB),
**caractérisé en ce que** les bobines électromagnétiques plates (121 - 124) du réseau (120) de bobines électromagnétiques plates (121-124) sont agencées de sorte qu'un courant électrique circule, dans des segments adjacents (121a, 122a) de deux bobines électromagnétiques plates (121-124) juxtaposées (121, 122), dans des directions communes qui alternent de paire en paire, ledit réseau (120) de bobines électromagnétiques plates (121-124) étant apte à générer une force de Laplace sous l'effet du courant électrique traversant ledit réseau (120) de bobines électromagnétiques plates (121-124), et **en ce que** l'actionneur vibrotactile (100) comporte :
- un réseau (110) d'aimants permanents contigus (111-119) assemblés linéairement dans un deuxième plan(PA) parallèle au premier plan (PB) du réseai (120) de bobines électromagnétiques plates (121-124) et dont les polarités sont orientées dans plus de deux directions différentes, ledit réseau (110) d'aimants permanents contigus (111-119) formant un réseau de Halbach générant des lignes de champs magnétiques orientées vers le réseau (120) de bobines électromagnétiques plates (121-124), une interaction électromagnétique entre des lignes de courant traversant le réseau (120) de bobines électromagnétiques plates (121-124) et les lignes de champs magnétiques entraînant, par la force de Laplace, des mouvements translatifs relatifs entre le réseau (120) de bobines électromagnétiques plates (121-124) et le réseau (110) d'aimants permanents contigus (111-119), et
- des moyens de guidage élastiques (140) pour générer des vibrations haptiques à partir des mouvements translatifs relatifs entre le réseau (120) de bobines électromagnétiques plates (121-124) et le réseau (110) d'aimants permanents contigus (111-119).

2. Actionneur vibrotactile (100) selon la revendication 1, **caractérisé en ce qu'**il comporte un bâti (130) dans lequel sont montés le réseau (120) de bobines électromagnétiques plates (121-124) et le réseai (110) d'aimants permanents contigus (111-119).

3. Actionneur vibrotactile (100) selon la revendication 2, **caractérisé en ce que** les moyens de guidage élastiques (140) sont montés au moins partiellement entre le bâti (130) et l'un parmi le réseau (120) de bobines électromagnétiques plates (121-124) et le réseau (110) d'aimants permanents contigus (111-119).

4. Actionneur vibrotactile (100) selon l'une quelconque des revendications 1 à 3.
**caractérisé en ce que** les moyens de guidage élastiques (140) sont montés longitudinalement dans le premier plan (PB) du réseau (120) de bobines électromagnétiques plates (121-124).

5. Actionneur vibrotactile (100) selon l'une quelconque des revendications 1 à 3.
**caractérisé en ce que** les moyens de guidage élastiques (140) sont montés longitudinalement dans le deuxième plan (PA) du réseau (120) d'aimants permanents contigus (111-119).

6. Actionneur vibrotactile (100) selon l'une quelconque des revendications 1 à 5.
**caractérisé en ce que** les moyens de guidage élastiques (140) comportent au moins deux éléments de guidage et de rappel (140) montés chacun à une extrémité du réseau (120) de bobines électromagnétiques plates (121-124) ou du réseau (110) d'aimants permanents contigus (111-119).

7. Actionneur vibrotactile (100) selon la revendication 5 ou 6, **caractérisé en ce que** chaque élément de guidage et de rappel (140) comporte une lame mince (141) en forme de S.

8. Actionneur vibrotactile (100) selon la revendication 5 ou 6, **caractérisé en ce que** chaque élément de guidage et de rappel (140) comporte une lame mince (142) en forme de X.

9. Actionneur vibrotactile (100) selon la revendication 5 ou 6, **caractérisé en ce que** les éléments de guidage et de rappel (140) sont montés coulissant sur des glissières (143c) ou des chemins de roulement à billes, fixés longitudinalement dans le bâti (130).

10. Actionneur vibrotactile (100) selon l'une quelconque des revendications 1 à 3.
**caractérisé en ce que** les moyens de guidage élastiques (140) sont montés latéralement le long du réseau (110) d'aimants permananets contigus (111-119) ou du réseau (120) de bobines électromagnétiques plates (121-124).

11. Actionneur vibrotactile selon la revendication 10, **caractérisé en ce que** les moyens de guidage élastiques (140) comportent des éléments de guidage et de rappel (140) comportant chacun des lames minces (151) en forme de boucles oblongues montées de part et d'autre du réseau (120) de bobines électromagnétiques plates (121-124) ou du réseau (110) d'aimants permanents contigus (111-119).

12. Actionneur vibrotactile (100) selon l'une quelconque des revendications 6 à 10.
**caractérisé en ce que** les éléments de guidage et de rappel (140) comprennent des moyens d'entrave (190) aptes à contraindre les mouvements translatifs relatifs dans la direction normale au réseau (110) d'aimants permanents contigus (111-119) et au réseau (120) de bobines électromagnétiques plates (121-124).

13. Actionneur vibrotactile (100) selon l'une quelconque des revendications 1 à 12.
**caractérisé en ce que** chaque bobine électromagnétiques plates (121-124) du réseau (120) de bobines électromagnétiques plates (121-124) (100) comporte un empilement de spires plates.

14. Actionneur vibrotactile (100) selon l'une quelconque des revendications 1 à 3.
**caractérisé en ce que** le réseau (120) de bobines électromagnétiques plates (121-124) est fixé sur le bâti (130) et le réseau (110) d'aimants permanents contigus (111-119) est fixé sur une surface mobile (152), ladite surface mobile (152) étant reliée au bâti (130) par des liaisons flexibles (145).

15. Actionneur vibrotactile (100), comportant un réseau (120) de bobines électromagnétiques plates (121-124) positionnées de façon contigüe dans un premier plan (PB).
**caractérisé en ce que** les bobines électromagnétiques plates (121 - 124) du réseau (120) de bobines électromagnétiques plates (121-124) sont agencées de sorte qu'un courant électrique circule dans des directions identiques dans chacune des bobines électromagnétiques plates (121-124), ledit réseau (120) de bobines électromagnétiques plates (121-124) étant apte à générer une force de Laplace sous l'effet du courant électrique traversant ledit réseau (120) de bobines électromagnétiques plates (121-124), et **en ce que** l'actionneur vibrotactile (100) comporte :
- un réseau (110) d'aimants permanents contigus (111-119) assemblés linéairement dans un deuxième plan (PA) parallèle au premier plan (PB) du réseau (120) de bobines électromagnétiques plates (121-124) et dont les polarités sont orientées dans plus de deux directions différentes, ledit réseau (110) d'aimants permanents contigus (111-119) formant un réseau de Halbach générant des lignes de champs magnétiques orientées vers le réseau (120) de bobines électromagnétiques plates (121-124), une interaction électromagnétique entre des lignes de courant traversant le réseau (120) de bobines électromagnétiques plates (121-124) et les lignes de champs magnétiques entrainant, par la force de Laplace, des mouvements translatifs relatifs entre le réseau (120) de bobines électromagnétiques plates (121-124) et le réseau (110) d'aimants permanents contigus (111-119), et
- des moyens de guidage élastiques (140) pour générer des vibrations haptiques à partir des mouvements translatifs relatifs entre le réseau (120) de bobines électromagnétiques plates (121-124) et le réseau (110) d'aimants permanents contigus (111-119).

16. Actionneur vibrotactile (100) selon la revendication 15, **caractérisé en ce qu'**il comporte un bâti (130) dans lequel sont montés le réseau (120) de bobines électromagnétiques plates (121-124) et le réseai (110) d'aimants permanents contigus (111-119).

17. Actionneur vibrotactile (100) selon la revendication 16, **caractérisé en ce que** les moyens de guidage élastiques (140) sont montés au moins partiellement entre le bâti (130) et l'un parmi le réseau (120) de bobines électromagnétiques plates (121-124) le réseau (110) d'aimants permanents contigus (111-119).

18. Actionneur vibrotactile (100) selon l'une quelconque des revendications 15 à 17.
**caractérisé en ce que** les moyens de guidage élastiques (140) sont montés longitudinalement dans le premier plan (PB) du réseau (120) de bobines électromagnétiques plates (121-124).

19. Actionneur vibrotactile (100) selon l'une quelconque des revendications 15 à 17.
**caractérisé en ce que** les moyens de guidage élastiques (140) sont montés longitudinalement dans le deuxième plan (PA) du réseau (110) d'aimants permanents contigus (111-119).

20. Actionneur vibrotactile (100) selon l'une quelconque des revendications 15 à 19.
**caractérisé en ce que** les moyens de guidage élastiques (140) comportent au moins deux éléments de guidage et de rappel (140) montés chacun à une extrémité du réseau (120) de bobines électromagnétiques plates (121-124) ou du réseau (110) d'aimants permanents contigus (111-119).

21. Actionneur vibrotactile (100) selon la revendication 19 ou 20, **caractérisé en ce que** chaque élément de guidage et de rappel (140) comporte une lame mince (141) en forme de S.

22. Actionneur vibrotactile (100) selon la revendication 19 ou 20, **caractérisé en ce que** chaque élément de guidage et de rappel (140) comporte une lame mince (142) en forme de X.

23. Actionneur vibrotactile (100) selon la revendication 19 ou 20, **caractérisé en ce que** les éléments de guidage et de rappel (140) sont montés coulissant sur des glissières (143c) ou des chemins de roulement à billes, fixés longitudinalement dans le bâti (130).

24. Actionneur vibrotactile (100) selon l'une quelconque des revendications 15 à 17,
**caractérisé en ce que** les moyens de guidage élastiques (140) sont montés latéralement le long du réseau (110) d'aimants permanents contigus (111-119) ou du réseau (120) de bobines électromagnétiques plates (121-124).

25. Actionneur vibrotactile (100) selon la revendication 24, **caractérisé en ce que** les moyens de guidage élastiques (140) comportent des éléments de guidage et de rappel (140) comportant chacun des lames minces (151) en forme de boucles oblongues montées de part et d'autre du réseau (120) de bobines électromagnétiques plates (121-124) ou du réseau (110) d'aimants permanents contigus (111-119).

26. Actionneur vibrotactile (100) selon l'une quelconque des revendications 20 à 24.
**caractérisé en ce que** les éléments de guidage et de rappel (140) comprennent des moyens d'entrave (160) aptes à contraindre les mouvements translatifs relatifs dans la direction normale au réseau (110) d'aimants permanents contigus (111-119) et au réseau (120) de bobines électromagnétiques plates (121-124).

27. Actionneur vibrotactile (100) selon l'une quelconque des revendications 15 à 26.
**caractérisé en ce que** chaque bobine électromagnétiques plates (121-124) du réseau (120) de bobines électromagnétiques plates (121-124) comporte un empilement de spires plates.

## Patentansprüche

1. Vibrotaktiler Aktuator (100) mit einer Anordnung (120) von flachen elektromagnetischen Spulen (121-124), die in einer ersten Ebene (PB) aneinandergrenzend angeordnet sind, **dadurch gekennzeichnet, dass** die flachen elektromagnetischen Spulen (121-124) der Anordnung (120) von flachen elektromagnetischen Spulen (121-124) so angeordnet sind, dass ein elektrischer Strom in benachbarten Segmenten (121a, 122a) von zwei nebeneinanderliegenden (121, 122) flachen elektromagnetischen Spulen (121 - 124) in gemeinsame Richtungen fließt, die von Paar zu Paar wechseln, wobei die Anordnung (120) von flachen elektromagnetischen Spulen (121 - 124) dazu geeignet ist, eine Laplace-Kraft unter der Wirkung des elektrischen Stroms zu erzeugen, der durch die Anordnung (120) von flachen elektromagnetischen Spulen (121 - 124) fließt, und dass der vibrotaktile Aktuator (100) umfasst:
- eine Anordnung (110) von aneinandergrenzenden Permanentmagneten (111-119), die linear in einer zweiten Ebene (PA) parallel zur ersten Ebene (PB) der Anordnung (120) von flachen elektromagnetischen Spulen (121-124) aufgebaut sind und deren Polaritäten in mehr als zwei verschiedene Richtungen ausgerichtet sind, wobei die Anordnung (110) von aneinandergrenzenden Permanentmagneten (111-119) eine Halbach-Anordnung bildet, die Magnetfeldlinien erzeugt, die auf die Anordnung (120) von flachen elektromagnetischen Spulen (121-124) ausgerichtet sind, wobei eine elektromagnetische Wechselwirkung zwischen Stromleitungen durch die Anordnung (120) flacher elektromagnetischer Spulen (121-124) und den Magnetfeldlinien verlaufen, die durch die Laplace-Kraft translative Relativbewegungen zwischen der Anordnung (120) flacher elektromagnetischer Spulen (121-124) und der Anordnung (110) aneinandergrenzender Permanentmagnete (111-119) bewirkt, und
- elastische Führungsmittel (140) zum Erzeugen haptischer Vibrationen aus den translativen Relativbewegungen zwischen der Anordnung (120) flacher elektromagnetischer Spulen (121-124) und der Anordnung (110) aneinandergrenzender Permanentmagnete (111-119).

2. Verfahren (100) nach Anspruch 1, **dadurch gekennzeichnet, dass** es einen Rahmen (130) umfasst, in dem die Anordnung (120) von flachen elektromagnetischen Spulen (121-124) und die Anordnung (110) von aneinandergrenzenden Permanentmagneten (111-119) montiert sind.

3. Vibrotaktiler Aktuator (100) nach Anspruch 2, **dadurch gekennzeichnet, dass** die elastischen Führungsmittel (140) zumindest teilweise zwischen dem Rahmen (130) und einer der Anordnung (120) von flachen elektromagnetischen Spulen (121-124) und der Anordnung (110) von aneinandergrenzenden Permanentmagneten (111-119) angebracht sind.

4. Vibrotaktiler Aktuator (100) nach einem der Ansprüche 1 bis 3, **dadurch gekennzeichnet, dass** die elastischen Führungsmittel (140) in Längsrichtung in der ersten Ebene (PB) der Anordnung (120) von flachen elektromagnetischen Spulen (121-124) angebracht sind.

5. Vibrotaktiler Aktuator (100) nach einem der Ansprüche 1 bis 3, **dadurch gekennzeichnet, dass** die elastischen Führungsmittel (140) in der zweiten Ebene (PA) der Anordnung (120) von aneinandergrenzenden Permanentmagneten (111-119) in Längsrichtung angebracht sind.

6. Vibrotaktiler Aktuator (100) nach einem der Ansprüche 1 bis 5, **dadurch gekennzeichnet, dass** die elastischen Führungsmittel (140) mindestens zwei Führungs- und Rückstellelemente (140) umfassen, die jeweils an einem Ende der Anordnung (120) von flachen elektromagnetischen Spulen (121-124) oder der Anordnung (110) von aneinandergrenzenden Permanentmagneten (111-119) angebracht sind.

7. Vibrotaktiler Aktuator (100) nach Anspruch 5 oder 6, **dadurch gekennzeichnet, dass** jedes Führungs- und Rückstellelement (140) eine dünne S-förmige Lamelle (141) aufweist.

8. Vibrotaktiler Aktuator (100) nach Anspruch 5 oder 6, **dadurch gekennzeichnet, dass** jedes Führungs- und Rückstellelement (140) eine dünne X-förmige Lamelle (142) aufweist.

9. Vibrotaktiler Aktuator (100) nach Anspruch 5 oder 6, **dadurch gekennzeichnet, dass** die Führungs- und Rückstellelemente (140) gleitend auf Gleitschienen (143c) oder Kugelbahnen montiert sind, die in Längsrichtung in dem Rahmen (130) befestigt sind.

10. Vibrotaktiler Aktuator (100) nach einem der Ansprüche 1 bis 3, **dadurch gekennzeichnet, dass** die elastischen Führungsmittel (140) seitlich entlang der Anordnung (110) von aneinandergrenzenden Permanentmagneten (111-119) oder der Anordnung (120) von flachen elektromagnetischen Spulen (121-124) angebracht sind.

11. Vibrotaktiler Aktuator nach Anspruch 10, **dadurch gekennzeichnet, dass** die elastischen Führungsmittel (140) Führungs- und Rückstellelemente (140) umfassen, die jeweils dünne Lamellen (151) in Form von länglichen Schleifen aufweisen, die auf beiden Seiten der Anordnung (120) von flachen elektromagnetischen Spulen (121-124) oder der Anordnung (110) von aneinandergrenzenden Permanentmagneten (111-119) angebracht sind.

12. Vibrotaktiler Aktuator (100) nach einem der Ansprüche 6 bis 10, **dadurch gekennzeichnet, dass** die Führungs- und Rückstellelemente (140) Hemmungsmittel (190) umfassen, die geeignet sind, die translativen Relativbewegungen in senkrechter Richtung zur Anordnung (110) von aneinandergrenzenden Permanentmagneten (111-119) und zur Anordnung (120) von flachen elektromagnetischen Spulen (121-124) zu beschränken.

13. Vibrotaktiler Aktuator (100) nach einem der Ansprüche 1 bis 12, **dadurch gekennzeichnet, dass** jede flache elektromagnetische Spule (121-124) der Anordnung (120) von flachen elektromagnetischen Spulen (121-124) einen Stapel von flachen Windungen aufweist.

14. Vibrotaktiler Aktuator (100) nach einem der Ansprüche 1 bis 3, **dadurch gekennzeichnet, dass** die Anordnung (120) von flachen elektromagnetischen Spulen (121-124) an dem Rahmen (130) befestigt ist und die Anordnung (110) von aneinandergrenzenden Permanentmagneten (111-119) an einer beweglichen Fläche (152) befestigt ist, wobei die bewegliche Fläche (152) durch flexible Verbindungen (145) mit dem Rahmen (130) verbunden ist.

15. Vibrotaktiler Aktuator (100) mit einer Anordnung (120) flacher elektromagnetischer Spulen (121 - 124), die in einer ersten Ebene (PB) aneinandergrenzend positioniert sind, **dadurch gekennzeichnet, dass** die flachen elektromagnetischen Spulen (121 - 124) der Anordnung (120) von flachen elektromagnetischen Spulen (121 - 124) so angeordnet sind, dass ein elektrischer Strom in identischen Richtungen in jeder der flachen elektromagnetischen Spulen (121 - 124) fließt, wobei die Anordnung (120) von flachen elektromagnetischen Spulen (121 - 124) dazu geeignet ist,
unter der Wirkung des elektrischen Stroms, der durch die Anordnung (120) von flachen elektromagnetischen Spulen (121-124) fließt, eine Laplace-Kraft zu generieren, und dass der vibrotaktile Aktuator (100) umfasst:
- eine Anordnung (110) von aneinandergrenzenden Permanentmagneten (111-119), die linear in einer zweiten Ebene (PA) parallel zur ersten Ebene (PB) der Anordnung (120) von flachen elektromagnetischen Spulen (121-124) aufgebaut sind und deren Polaritäten in mehr als zwei verschiedene Richtungen orientiert sind, wobei die Anordnung (110) von aneinandergrenzenden Permanentmagneten (111-119), die eine Halbach-Anordnung bilden, die Magnetfeldlinien erzeugt, die auf die Anordnung (120) von flachen elektromagnetischen Spulen (121-124) gerichtet sind, wobei eine elektromagnetische Wechselwirkung zwischen Stromleitungen, die durch die Anordnung (120) flacher elektromagnetischer Spulen (121-124) verlaufen, und den Magnetfeldlinien, die durch die Laplace-Kraft translative Relativbewegungen zwischen der Anordnung (120) flacher elektromagnetischer Spulen (121-124) und der Anordnung (110) aneinandergrenzender Permanentmagnete (111-119) bewirkt, und
- elastische Führungsmittel (140) zum Erzeugen haptischer Vibrationen aus den translativen Relativbewegungen zwischen der Anordnung (120) flacher elektromagnetischer Spulen (121-124) und der Anordnung (110) aneinandergrenzender Permanentmagnete (111-119).

16. Vibrotaktiler Aktuator (100) nach Anspruch 15, **dadurch gekennzeichnet, dass** er einen Rahmen (130) umfasst, in dem die Anordnung (120) von flachen elektromagnetischen Spulen (121-124) und die Anordnung (110) von aneinandergrenzenden Permanentmagneten (111-119) montiert sind.

17. Vibrotaktiler Aktuator 11 (100) nach Anspruch 16, **dadurch gekennzeichnet, dass** die elastischen Führungsmittel (140) zumindest teilweise zwischen dem Rahmen (130) und einer aus der Anordnung (120) von flachen elektromagnetischen Spulen (121-124) und der Anordnung (110) von aneinandergrenzenden Permanentmagneten (111-119) angebracht sind.

18. Vibrotaktiler Aktuator (100) nach einem der Ansprüche 15 bis 17, **dadurch gekennzeichnet, dass** die elastischen Führungsmittel (140) in Längsrichtung in der ersten Ebene (PB) der Anordnung (120) von flachen elektromagnetischen Spulen (121-124) angebracht sind.

19. Vibrotaktiler Aktuator (100) nach einem der Ansprüche 15 bis 17, **dadurch gekennzeichnet, dass** die elastischen Führungsmittel (140) in der zweiten Ebene (PA) der Anordnung (110) von aneinandergrenzenden Permanentmagneten (111-119) in Längsrichtung angebracht sind.

20. Vibrotaktiler Aktuator (100) nach einem der Ansprüche 15 bis 19, **dadurch gekennzeichnet, dass** die elastischen Führungsmittel (140) mindestens zwei Führungs- und Rückstellelemente (140) umfassen, die jeweils an einem Ende der Anordnung (120) von flachen elektromagnetischen Spulen (121-124) oder der Anordnung (110) von aneinandergrenzenden Permanentmagneten (111-119) angebracht sind.

21. Vibrotaktiler Aktuator (100) nach Anspruch 19 oder 20, **dadurch gekennzeichnet, dass** jedes Führungs- und Rückstellelement (140) eine dünne S-förmige Lamelle (141) aufweist.

22. Vibrotaktiler Aktuator (100) nach Anspruch 19 oder 20, **dadurch gekennzeichnet, dass** jedes Führungs- und Rückstellelement (140) eine dünne X-förmige Lamelle (142) aufweist.

23. Vibrotaktiler Aktuator (100) nach Anspruch 19 oder 20, **dadurch gekennzeichnet, dass** die Führungs- und Rückstellelemente (140) gleitend auf Gleitschienen (143c) oder Kugelbahnen montiert sind, die in Längsrichtung in dem Rahmen (130) befestigt sind.

24. Vibrotaktiler Aktuator (100) nach einem der Ansprüche 15 bis 17, **dadurch gekennzeichnet, dass** die elastischen Führungsmittel (140) seitlich entlang der Anordnung (110) von aneinandergrenzenden Permanentmagneten (111-119) oder der Anordnung (120) von flachen elektromagnetischen Spulen (121-124) angebracht sind.

25. Vibrotaktiler Aktuator (100) nach Anspruch 24, **dadurch gekennzeichnet, dass** die elastischen Führungsmittel (140) Führungs- und Rückstellelemente umfassen, die jeweils dünne Lamellen (151) in Form von länglichen Schleifen aufweisen, die auf beiden Seiten der Anordnung (120) von flachen elektromagnetischen Spulen (121-124) oder der Anordnung (110) von aneinandergrenzenden Permanentmagneten (111-119) angebracht sind.

26. Vibrotaktiler Aktuator (100) nach einem der Ansprüche 20 bis 24, **dadurch gekennzeichnet, dass** die Führungs- und Rückstellelemente (140) Hemmungsmittel (160) umfassen, die geeignet sind, die translativen Relativbewegungen in senkrechter Richtung zur Anordnung (110) von aneinandergrenzenden Permanentmagneten (111-119) und zur Anordnung (120) von flachen elektromagnetischen Spulen (121-124) zu beschränken.

27. Vibrotaktiler Aktuator (100) nach einem der Ansprüche 15 bis 26, **dadurch gekennzeichnet, dass** jede flache elektromagnetische Spule (121-124) der Anordnung (120) von flachen elektromagnetischen Spulen (121-124) einen Stapel von flachen Windungen aufweist.

## Claims

1. Vibrotactile actuator (100), comprising a network (120) of flat electromagnetic coils (121-124) positioned contiguously in a first plane (PB), **characterized in that** the flat electromagnetic coils (121-124) of the network (120) of flat electromagnetic coils (121-124) are arranged such that an electrical current flows, in adjacent segments (121 a, 122a) of two juxtaposed flat electromagnetic coils (121-124), in common directions which alternate from pair to pair, said network (120) of flat electromagnetic coils (121-124) being adapted to generate a Laplace force under the effect of the electrical current traversing said network (120) of flat electromagnetic coils (121-124), and **in that** the vibrotactile actuator (100) comprises:
- a network (110) of permanent contiguous magnets (111-119) linearly assembled in a second plane (PA) parallel to the first plane (PB) of the network (120) of flat electromagnetic coils (121-124) and whose polarities are aligned in more than two different directions, said network (110) of permanent contiguous magnets (111-119) forming a Halbach array generating magnetic field lines oriented towards the network (120) of flat electromagnetic coils (121-124), an electromagnetic interaction between current lines traversing the network (120) of flat electromagnetic coils (121-124) and the magnetic field lines causes, due to the Laplace force, relative translational motions between the network (120) of flat electromagnetic coils (121-124) and the network (110) of permanent contiguous magnets (111-119), and
- elastic guidance means (140) to generate haptic vibrations from the relative translational motions between the network (120) of flat electromagnetic coils (121-124) and the network (110) of permanent contiguous magnets (111-119).

2. Vibrotactile actuator (100) according to claim 1, **characterized in that** that it comprises a frame (130) in which the network (120) of flat electromagnetic coils (121-124) and the network (110) of permanent contiguous magnets (111-119) are installed.

3. Vibrotactile actuator (100) according to claim 2, **characterized in that** the elastic guidance means (140) are installed at least partially between the frame (130) and one among the network (120) of flat electromagnetic coils (121-124) and the network (110) of permanent contiguous magnets (111-119).

4. Vibrotactile actuator (100) according to any one of claims 1 to 3, **characterized in that** the elastic guidance means (140) are installed longitudinally in the first plane (PB) of the network (120) of flat electromagnetic coils (121-124).

5. Vibrotactile actuator (100) according to any one of claims 1 to 3, **characterized in that** the elastic guidance means (140) are installed longitudinally in the second plane (PA) of the network (110) of permanent contiguous magnets (111-119).

6. Vibrotactile actuator (100) according to any one of claims 1 to 5, **characterized in that** the elastic guidance means (140) comprise at least two guidance and return elements (140), each installed at one end of the network (120) of flat electromagnetic coils (121-124) or of the network (110) of permanent contiguous magnets (111-119).

7. Vibrotactile actuator (100) according to claim 5 or 6, **characterized in that** each guidance and return element (140) comprises an S-shaped thin blade (141).

8. Vibrotactile actuator (100) according to claim 5 or 6, **characterized in that** each guidance and return element (140) comprises an X-shaped thin blade (142).

9. Vibrotactile actuator (100) according to claim 5 or 6, **characterized in that** the guidance and return elements (140) are installed sliding on guide rails (143c) or ball bearing raceways, attached longitudinally in the frame (130).

10. Vibrotactile actuator (100) according to any one of claims 1 to 3, **characterized in that** the elastic guidance means (140) are installed laterally along the network (110) of permanent contiguous magnets (111-119) or the network (120) of flat electromagnetic coils (121-124).

11. Vibrotactile actuator according to claim 10, **characterized in that** the elastic guidance means (140) comprise guidance and return elements (140), each comprising thin blades (151) with a shape of oblong loops installed on both sides of the network (120) of flat electromagnetic coils (121-124) or of the network (110) of permanent contiguous magnets (111-119).

12. Vibrotactile actuator (100) according to any one of claims 6 to 10, **characterized in that** the guidance and return elements (140) comprise obstruction means (160) adapted to constrain the relative linear motions in the direction normal to the network (110) of permanent contiguous magnets (111-119) and to the network (120) of flat electromagnetic coils (121-124).

13. Vibrotactile actuator (100) according to any one of claims 1 to 12, **characterized in that** each flat electromagnetic coil (121-124) of the network (120) of flat electromagnetic coils (121-124) comprises a stack of flat spirals.

14. Vibrotactile actuator (100) according to any one of claims 1 to 3, **characterized in that** the network (120) of flat electromagnetic coils (121-124) is attached to the frame (130) and the network (110) of permanent contiguous magnets (111-119) is attached to a moving surface (152), said moving surface being connected to the frame (130) by flexible connections (145).

15. Vibrotactile actuator (100), comprising a network (120) of flat electromagnetic coils (121-124) positioned contiguously in a first plane (PB), **characterized in that** the flat electromagnetic coils (121-124) of the network (120) of flat electromagnetic coils (121-124) are arranged such that an electrical current flows in identical directions in each of the flat electromagnetic coils (121-124), said network of coils being adapted to generate a Laplace force under the effect of the electrical current traversing the network (120) of flat electromagnetic coils (121-124), and **in that** the vibrotactile actuator (100) comprises:
- a network (110) of permanent contiguous magnets (111-119) linearly assembled in a second plane (PA) parallel to the first plane (PB) of the network (120) of flat electromagnetic coils (121-124) and whose polarities are aligned in more than two different directions, said network (110) of permanent contiguous magnets (111-119) forming a Halbach array generating magnetic field lines oriented towards the network (120) of flat electromagnetic coils (121-124), an electromagnetic interaction between current lines traversing the network (120) of flat electromagnetic coils (121-124) and the magnetic field lines causes, due to the Laplace force, relative translational motions between the network (120) of flat electromagnetic coils (121-124) and the network (110) of permanent contiguous magnets (111-119), and
- elastic guidance means (140) to generate haptic vibrations from the relative translational motions between the network (120) of flat electromagnetic coils (121-124) and the network (110) of permanent contiguous magnets (111-119).

16. Vibrotactile actuator (100) according to claim 15, **characterized in that** it comprises a frame (130) in which the network (120) of flat electromagnetic coils (121-124) and the network (110) of permanent contiguous magnets (111-119) are installed.

17. Vibrotactile actuator (100) according to claim 16, **characterized in that** the elastic guidance means (140) are installed at least partially between the frame (130) and one among the network (120) of flat electromagnetic coils (121-124) and the network (110) of permanent contiguous magnets (111-119).

18. Vibrotactile actuator (100) according to any one of claims 15 to 17, **characterized in that** the elastic guidance means (140) are installed longitudinally in the first plane (PB) of the network (120) of flat electromagnetic coils (121-124).

19. Vibrotactile actuator according to any of claims 15 to 17, **characterised by** the fact that the elastic guidance means (140) are installed longitudinally in the second plane (PA) of the network (110) of permanent contiguous magnets (111-119).

20. Vibrotactile actuator (100) according to any one of claims 15 to 19, **characterized in that** the elastic guidance means (140) comprise at least two guidance and return elements (140), each installed at one end of the network (120) of flat electromagnetic coils (121-124) or of the network (110) of permanent contiguous magnets (111-119).

21. Vibrotactile actuator (100) according to claim 19 or 20, **characterized in that** each guidance and return element (140) comprises an S-shaped thin blade (141).

22. Vibrotactile actuator (100) according to claim 19 or 20, **characterized in that** each guidance and return element (140) comprises an X-shaped thin blade (142).

23. Vibrotactile actuator (100) according to claim 19 or 20, **characterized in that** the guidance and return elements (140) are installed sliding on guide rails (143c) or ball bearing raceways, attached longitudinally in the frame (130).

24. Vibrotactile actuator (100) according to any one of claims 15 to 17, **characterized in that** the elastic guidance means (140) are installed laterally along the network (110) of permanent contiguous magnets (111-119) or the network (120) of flat electromagnetic coils (121-124).

25. Vibrotactile actuator (100) according to claim 24, **characterized in that** the elastic guidance means (140) comprise guidance and return elements (140), each comprising thin blades (151) with a shape of oblong loops installed on both sides of the network (120) of flat electromagnetic coils (121-124) or of the network (110) of permanent contiguous magnets (111-119).

26. Vibrotactile actuator (100) according to any one of claims 20 to 24, **characterized in that** the guidance and return elements (140) comprise obstruction means (160) adapted to constrain the relative linear motions in the direction normal to the network (110) of permanent contiguous magnets (111-119) and to the network (120) of flat electromagnetic coils (121-124).

27. Vibrotactile actuator (100) according to any one of claims 15 to 26, **characterized in that** each flat electromagnetic coil (121-124) of the network (120) of flat electromagnetic coils (121-124) comprises a stack of flat spirals.
